# FASCICULE DE BREVET EUROPEEN

(11) **EP 2 300 290 B1**
(45) Date de publication et mention de la délivrance du brevet: **28.03.2012**
(21) Numéro de dépôt: 09797477.8
(22) Date de dépôt: 10.07.2009
(51) Int. Cl.: B60T 11/16, B60T 11/18, B60T 13/14

(54) **MAÎTRE-CYLINDRE COMPORTANT DES MOYENS D'INJECTION DE LIQUIDE DE FREIN DANS LEDIT MAÎTRE-CYLINDRE ET UN SYSTEME DE FREINAGE COMPORTANT UN TEL MAÎTRE-CYLINDRE**
HAUPTZYLINDER MIT MITTELN ZUM INJIZIEREN VON BREMSFLÜSSIGKEIT IN BESAGTEN HAUPTZYLINDER SOWIE BREMSSYSTEM MIT SOLCH EINEM HAUPTZYLINDER
MASTER CYLINDER COMPRISING A MEANS FOR INJECTING A BRAKING FLUID INTO SAID MASTER CYLINDER, AND BRAKING SYSTEM INCLUDING SUCH A MASTER CYLINDER

(30) Priorité: 17.07.2008 FR 0804081
(43) Date de publication de la demande: 30.03.2011
(73) Titulaire: Robert Bosch GmbH, 70442 Stuttgart (DE)
(72) Inventeur: CAGNAC, Bastien, 60660 CRAMOISY (FR); ANDERSON, Chris, F-75002 Paris (FR); SPROCQ, Raynald, F-77450 Esbly (FR)
(74) Mandataire: Hurwic, Aleksander Wiktor
(86) Numéro de dépôt international: PCT/EP2009/058814
(87) Numéro de publication internationale: WO 2010/006998

(56) Documents cités:
- DE-A1- 19 626 926
- FR-A- 2 782 047
- GB-A- 2 170 285
- GB-A- 2 348 685
- US-A1- 2007 266 850

## Description

La présente invention se rapporte principalement à un système freinage comportant un maître-cylindre comprenant des moyens de connection à un circuit de freinage hydraulique et des moyens de connection d'au moins une chambre du maître-cylindre à des moyens d'injection de liquide de frein dans ladite chambre.

Il est connu de réaliser des servomoteurs d'assistance de freinage exerçant une force sur une tige de poussée d'un maître cylindre qui est une fonction croissante de la force exercée par le conducteur sur une tige de commande, par l'intermédiaire d'une pédale de frein **et tel que décrit dans** GB 2 170285**.**

Il est également connu de mettre en oeuvre un simulateur de sensation pédale relié à une pédale munie de capteurs de consignes de freinage associés à un servomoteur exécutant ladite consigne. Au prix d'une complexité et d'une fragilité accrues, les dispositifs à simulateur permettent un découplage entre la position d'une pédale de frein et la pression hydraulique disponible dans les circuits de freinage. De même, WO 2007 080106 et WO 2007 080158, qui sont incorporés dans la présente demande de brevet par référence, décrivent des servomoteurs pneumatiques d'assistance au freinage avec découplage entre la tige de commande et la tige de poussée.

La présente invention a pour but d'offrir un système de freinage mettant en oeuvre un maître-cylindre permettant le découplage entre la pédale de frein et la pression régnant dans le circuit de freinage alimenté par ledit maître-cylindre présentant une grande robustesse et une simplicité de réalisation.

La présente invention a également pour but d'offrir un système de freinage ayant une pédale de frein particulièrement agréable à utiliser pour le conducteur, c'est-à-dire ayant une sensation pédale recherchée.

La présente invention a aussi pour but d'offrir le système de freinage comportant un dispositif d'assistance au freinage, mais permettant un freinage efficace en cas de non fonctionnement de ce dispositif

Ces buts sont atteints, selon la présente invention, en injectant, sur commande, du liquide de frein dans au moins une des chambres du maître-cylindre.

L'invention a principalement pour objet un maître-cylindre comportant au moins une chambre à volume variable et un piston mobile, dont le déplacement fait varier le volume de ladite chambre et des moyens de connection de ladite chambre à un circuit hydraulique de freinage caractérisé en ce qu'il comporte en outre des moyens de connection à une source de liquide de frein sous pression.

L'invention a également pour objet un maître-cylindre caractérisé en ce que lesdits moyens de connection à une source de liquide de frein sous pression débouchent directement dans ladite chambre à volume variable.

L'invention a également pour objet un maître-cylindre caractérisé en ce qu'il comporte une chambre de réalimentation et en ce que lesdits moyens de connection à une source de liquide de frein sous haute pression débouchent dans ladite chambre de réalimentation.

L'invention a aussi un système de freinage caractérisé en ce qu'il comporte un maître-cylindre, une source de liquide de frein sous pression connectée par lesdits moyens de connection à ladite chambre à volume variable dudit maître-cylindre et des moyens de commande d'alimentation de ladite chambre à volume variable en liquide de frein sous pression.

L'invention a également pour objet un système de freinage caractérisé en ce qu'il comporte en outre des moyens d'assistance de freinage hydraulique.

L'invention a également pour objet un système de freinage caractérisé en ce qu'il comporte des moyens de connection de la source de liquide de frein sous pression à une chambre de poussée desdits moyens d'assistance hydrauliques de freinage.

L'invention a également pour objet un système de freinage caractérisé en ce qu'il comporte en outre des moyens d'isolation hermétique, sur commande, de ladite chambre à volume variable dudit maître-cylindre par rapport à ladite source de liquide de frein sous pression.

L'invention a également pour objet un système caractérisé en ce que ladite source de liquide de frein sous pression comporte un maître-cylindre comportant une chambre à volume variable et un piston entraîné, sur commande, par un actionneur.

L'invention a également pour objet un système de freinage caractérisé en ce que ledit maître-cylindre de la source de liquide de frein sous pression est un maître-cylindre tandem comportant :
- une première chambre connectée par des moyens de connection à ladite chambre dudit maître-cylindre comportant des moyens de connection à un circuit hydraulique, et
- une seconde chambre à volume variable reliée par une connection audit moyen d'assistance hydraulique de freinage.

L'invention a également pour objet un système de freinage caractérisé en ce que ledit maître-cylindre de ladite source de liquide de frein sous pression comporte deux chambres ayant deux diamètres différents et en ce qu'ils comportent des moyens liant en translation les moyens assurant la variation des volumes internes desdites chambres à volume variable dudit maître-cylindre.

La présente invention sera mieux comprise au moyen de la description ci-après et des figures annexées données comme des exemples non limitatifs et parmi lesquels :
- la figure 1 est une vue en coupe schématique illustrant un premier exemple de réalisation d'un système selon la présente invention ;
- la figure 2 est une vue schématique en coupe d'un deuxième exemple de réalisation d'un système de freinage selon la présente invention ;
- la figure 3 est une vue en coupe d'un troisième exemple de réalisation du système de freinage selon la présente invention ;
- la figure 4 est une vue schématique en coupe d'un quatrième exemple de réalisation du dispositif selon la présente invention ;
- la figure 5 est une vue en coupe d'un cinquième exemple de réalisation d'un système de freinage selon la présente invention ;
- la figure 6 est une vue en coupe, à plus grande échelle, des moyens d'injection de liquide de frein mises en oeuvre dans le système de la figure 5.

Sur les figures de 1 à 6 on utilise les mêmes références pour désigner les mêmes éléments.

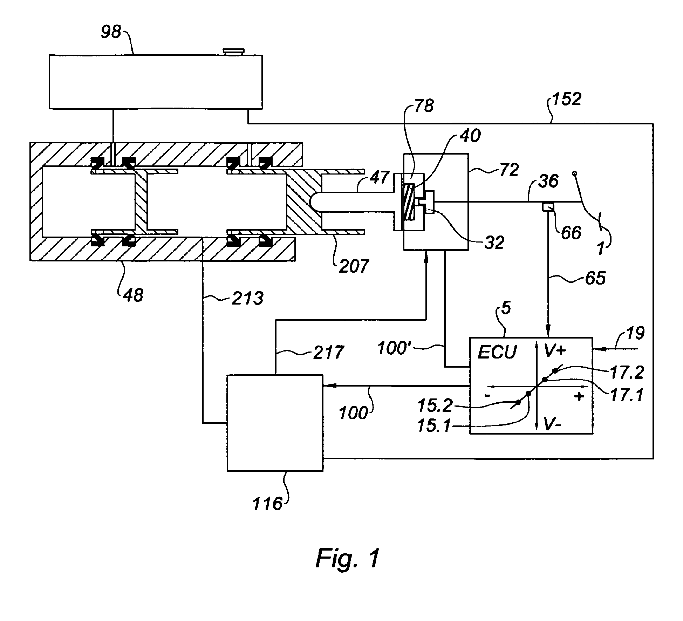

Sur la figure 1, on peut voir un système de freinage comportant une pédale de frein 1 entraînant une tige de commande 36, qui à son tour pousse sur un servomoteur 72 d'assistance au freinage. Le servomoteur 72 d'assistance au freinage exerce une force sur une tige de poussée amplifiée par le servomoteur d'assistance de freinage 72.

Le servomoteur 72 est par exemple un servomoteur pneumatique d'assistance au freinage, un servomoteur hydraulique d'assistance au freinage, un servomoteur électrique d'assistance au freinage ou autre. Typiquement, le servomoteur 72 est muni d'un dispositif de réaction, typiquement d'un disque de réaction en élastomère incompressible transmettant à la tige de commande 36 une partie de la réaction à la poussée exercée sur la tige de poussée 47.

La tige de poussée 47 pousse, sur commande, sur un piston primaire 207 d'un maître-cylindre 48. Dans l'exemple avantageux illustré, le maître-cylindre 48 est un maître-cylindre tandem, à réalimentation par une chambre de réalimentation située entre deux coupelles et des trous de réalimentation situés dans le piston. Toutefois, la mise en oeuvre d'autres types de maîtres-cylindres, tels que par exemple des maîtres-cylindres simples (à une chambre unique), ou à un nombre de chambres supérieur à 2 ne sort pas du cadre de la présente invention. De même, la mise en oeuvre de maîtres-cylindres à clapets ou analogues ne sort pas du cadre de la présente invention.

Un réservoir de liquide de frein 98 alimente directement, par écoulement gravitationnelle ou indirectement les chambres du maître-cylindre 48. Le maître-cylindre 48 comporte en outre des moyens de connection à un circuit de freinage hydraulique comportant des freins munis de pistons hydrauliques.

Avantageusement, le système selon la présente invention comporte en outre un capteur 66 détectant les consignes de freinage 65 transmises à un calculateur 5 (ECU en terminologie anglo-saxonne). Le calculateur 5 reçoit par ailleurs un signal 19 à partir d'autres capteurs, notamment des capteurs de pression ou d'autres calculateurs du véhicule. Le calculateur 5 délivre un signal 100 de commande à une source 116 de liquide de frein sous pression. Dans une première variant de réalisation, non illustrée, le servomoteur d'assistance de freinage 72 délivre, sur la tige de poussée 47, une force qui est une fonction croissante de la force exercée par la tige 36. Le rapport entre la force exercée par la tige 36 sur le servomoteur d'assistance 72 et la force exercée par ce servomoteur 72 sur la tige de poussée 47 est appelé rapport d'assistance. Le rapport d'assistance est constant pour des freinages à basse pression et augmente, avantageusement pour les freinages à haute pression correspondant à des freinages d'urgence en mettant en oeuvre un dispositif appelé assistance au freinage d'urgence (ou brake assist en terminologie anglo-saxonne).

Dans l'exemple illustré, le calculateur 5 est en outre relié par une liaison de commande 100' au servomoteur d'assistance de freinage 72, la force d'assistance étant exercée par le servomoteur 72 selon une consigne 100' élaborée par le calculateur 5 en fonction du signal 65 délivré par le capteur 66 et/ou du signal 19.

La source de pression est reliée par une connection 213 à une des chambres, par exemple, comme illustré, à la chambre primaire du maître-cylindre 48.

La source 116 assure le préremplissage et/ou le remplissage de la chambre primaire du maître cylindre 48 permettant le fonctionnement des modes actifs, c'est-à-dire sans nécessiter l'appui sur la pédale 1 du système de freinage, par exemple pour un freinage automatique sur commande d'un radar (ACC), un freinage de parking ou autre.

L'augmentation de la pression dans la chambre primaire du maître cylindre 48 pousse le piston secondaire qui à son tour assure la montée en pression dans le circuit secondaire.

Par ailleurs, en mode de freinage normal, c'est-à-dire résultant du fait que le conducteur appuie son pied sur la pédale 1, il est possible, selon l'invention, en injectant un volume de liquide dans la chambre primaire et/ou secondaire du maître-cylindre 48 de raccourcir la course pédale obtenue, ce raccourcissement de course pédale en fonctionnement normal permet de sélectionner un maître-cylindre de diamètre faible qui, en absence du dispositif selon la présente invention, résulterait en une course pédale trop longue pour être acceptée par l'utilisateur. Toutefois, la diminution du diamètre du maître-cylindre est masquée par l'injection de liquide de frein dans la chambre primaire et/ou secondaire du maître-cylindre 48. On peut par exemple utiliser des maîtres-cylindre 48 ayant un diamètre compris entre 2 et 50 mm de préférence entre 10 mm et 40 mm de manière encore préféré entre 19,6 mm et 33 mm par exemple égale à 22,2 mm, 23,8 mm ou 25,4 mm.

La diminution du diamètre de maître-cylindre avec la même course de la pédale, ou même une course de pédale diminuée de manière à augmenter le confort du conducteur en freinage normal, permet, en outre d'augmenter la pression dans les freins, pour une force d'application sur la pédale 1 donnée en cas de défaillance de la source de pression 116. Il est à noter que en cas d'une telle défaillance, avec un maître cylindre de diamètre réduit, se solde par une augmentation de la course pédale en défaillance (qui ne peut plus être masquée en absence d'injection de liquide de frein dans la chambre primaire et/ou secondaire du maître-cylindre 48). Toutefois, cette augmentation de course à la pédale sera tout à fait acceptable dans la mesure où elle est exceptionnelle (uniquement en cas de défaillance de la source de pression 116) et où elle améliore l'efficacité du freinage particulièrement pour les conducteurs incapables d'exercer une force trop grande sur la pédale de frein, notamment pour les personnes âgées et certaines femmes).

De même, la présente invention est particulièrement intéressante pour des véhicules hybrides comportant un moteur thermique et un moteur électrique susceptibles de fonctionner en générateur rechargeant les batteries lors des freinages. En effet, le freinage régénératif par le moteur électrique fonctionnant en générateur doit être complété de manière à obtenir le freinage désiré. Ainsi, un freinage actif peut correspondre à ce complément de freinage tout en permettant une sensation pédale normale, la tige de commande 36 et la tige de poussée 47 étant découplées par une injection de liquide de frein dans la chambre de poussée 76.

Dans le cas où le servomoteur 72 est un servomoteur hydraulique d'assistance au freinage, (hydroboost en terminologie anglo-saxonne), il est avantageux de relier la source 116 par une connection 217 au servomoteur 72. Toutefois, la mise en oeuvre d'une source haute pression séparée d'alimentation d'un servomoteur hydraulique d'assistance au freinage ne sort pas du cadre de la présente invention.

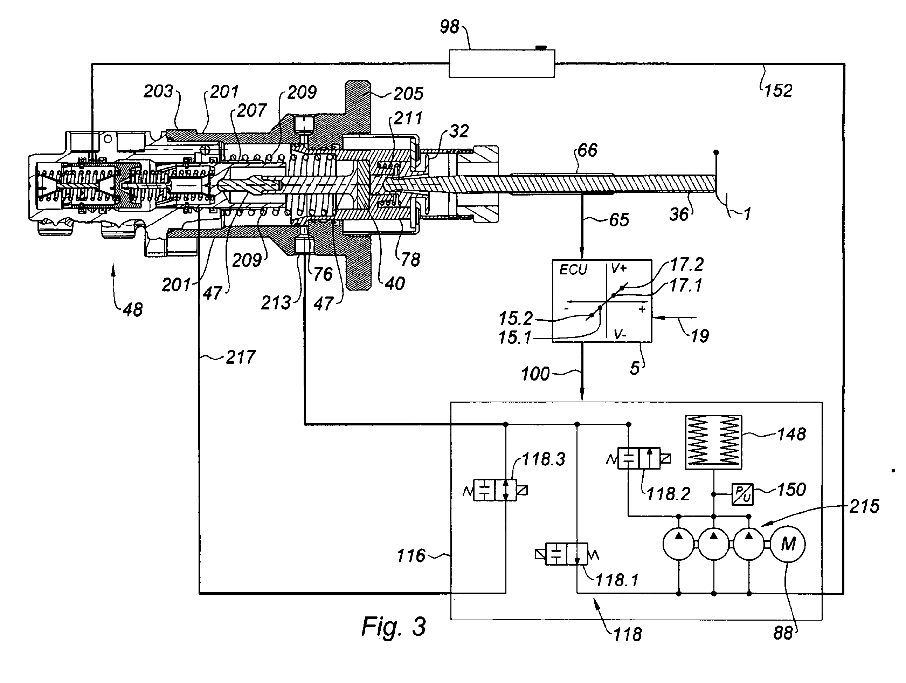

Comme il sera expliqué plus en détails en relation avec la figure 3, il est avantageux de ne pas relier directement la chambre du maître-cylindre 48 reliée à la source 116 au réservoir de liquide de frein 98. Par exemple, la réalimentation et/ou l'évacuation de liquide de frein de la chambre primaire s'effectue par la connection 213, la source 116 et une liaison 152 au réservoir 98.

Le système de freinage de la figure 1 exige la mise en oeuvre d'une source 116 particulièrement fiable dans la mesure où une fuite par la connection 213 entraînerait la perte du circuit de freinage primaire. Par contre, elle présente l'avantage de permettre l'évacuation, sur commande, du surplus de liquide de frein se trouvant dans la chambre primaire.

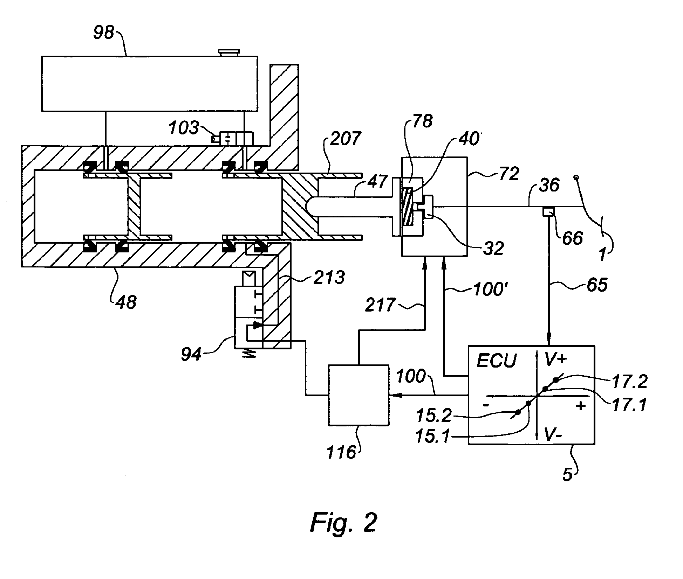

Le système du freinage de la figure 2 diffère de celui illustré sur la figure 1 en ce que la connection 213 reliant une chambre du maître-cylindre à la source 116 débouche dans la chambre de réalimentation située entre deux coupelles prenant appui sur le piston primaire 207 et, par ailleurs relié par écoulement gravitationnelle au réservoir 98 du liquide de frein. Dans un tel cas, on prévoit une électrovanne 103 assurant l'isolation hermétique, sur commande, de la réalimentation de la chambre de réalimentation de la chambre primaire du maître-cylindre 48 par rapport au réservoir 98.

En effet, la source 116 injecte du liquide de frein sous pression dans la chambre de réalimentation qui est reliée au réservoir du liquide de frein 98 sous pression atmosphérique. L'électrovanne 103, commandée avantageusement par le calculateur 5 empêche la remontée du fluide sous pression dans le réservoir. Au contraire, le fluide sous pression couche la coupelle avant et permet la réalimentation de la chambre primaire du maître-cylindre 48. Toutefois, la connection 213 ne permet plus d'évacuer un surplus de liquide à partir de la chambre primaire du maître-cylindre 48, surplus qui est évacué vers le réservoir 98 lorsque le piston 207 a reculé de manière à ce que le trou de réalimentation dudit piston 207 débouche dans la chambre de réalimentation.

Il est à noter qu'une fuite sur la connection 213, en cours de freinage, ne diminue pas la pression régnant dans la chambre primaire du maître-cylindre. Toutefois, à la longue, une telle fuite pourrait amener une diminution du niveau dans le réservoir 98 du liquide de frein.

Une connexion 213 assure l'alimentation en fluide sous pression, avantageusement en liquide de frein sous pression, de la chambre du maître-cylindre 48 à partir de la source de pression 116 est munie d'éléments mobiles de pressurisation du fluide avantageusement entraîné directement ou indirectement par un moteur 88, avantageusement, un moteur électrique. La source 116 comporte avantageusement une pompe, de préférence une pompe à piston de manière encore préférée, comportant un nombre de pistons impair par exemple égal à trois ou cinq. Les moyens de pressurisation peuvent être directement connectés à la connection 213 ; dans ce cas, l'augmentation de pression dans cette chambre est obtenue par la mise en route des moyens de pressurisation de la source 116. En variante, la source 116 stocke du fluide pressurisé et comporte des moyens d'isolement hermétique, avantageusement au moins une électrovanne, de manière, à délivrer, sur une commande 100 du fluide pressurisé à la chambre primaire du maître-cylindre 48.

De même, il peut s'avérer avantageux de disposer de moyens d'isolation hermétique, sur commande, externes à la source 116 telle que l'électrovanne 94 de la figure 2.

En outre, la électrovanne 94, ou des moyens d'isolation hermétiques internes à la source 116 permettent d'éviter d'avoir à actionner les moyens de génération de pression de la source 116 lorsque cela n'est pas nécessaire, par exemple en cours d'un freinage à niveau constant.

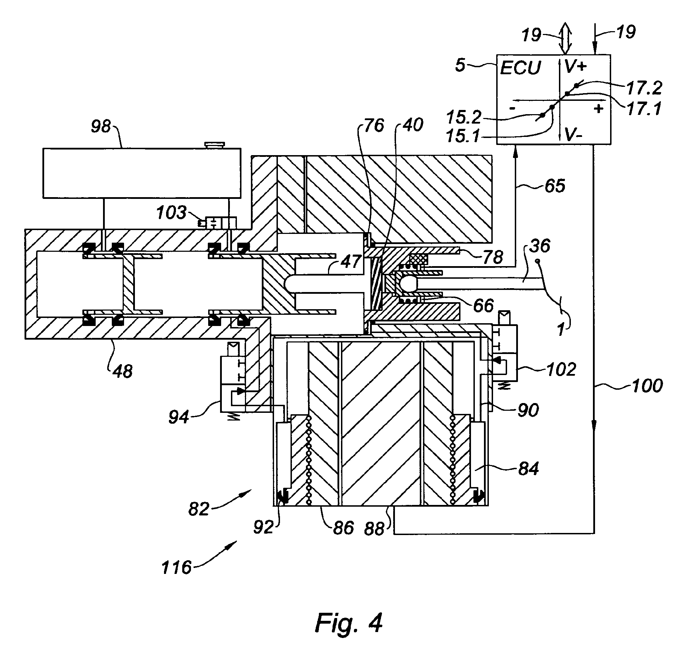

Dans l'exemple avantageux illustré, le système de freinage comporte un capteur 66, avantageusement, un capteur de position, de manière encore préférée, un capteur de position relative d'un premier équipage mobile relié à la pédale de frein 1, par rapport à la position d'un second équipage mobile lié à un piston 78 assurant l'assistance au freinage. Il est bien entendu que d'autres capteurs peuvent être mis en oeuvre comme par exemple un capteur de position absolue de la tige de commande 36, une jauge de contrainte de l'effort exercé sur cette tige, un capteur de pression régnant dans les circuits de freinage et/ou au niveau de la source 116, ou autre. Dans l'exemple avantageux illustré, le capteur 66 délivre un signal 65 à un calculateur 5 (ECU ou Electronic Control Unit en terminologie anglo saxonne) qui à son tour délivre un signal de commande 100 à la source de pression 116. Avantageusement, le calculateur 5 comporte un programme de pilotage de la source de pression 116 basée sur les positions relatives des deux équipages mobiles, la position d'équilibre recherchée par les consignes du calculateur 5 pouvant être nulle ou, avantageusement correspondre à un décalage de manière à, comme il est symboliquement représenté sur la figure 4 par des points 15.1, 15.2, 17.1 et 17.2, dynamiquement, sur commande, augmenter ou diminuer le saut lors d'un freinage.

Sur la figure 3, on peut voir un exemple de réalisation d'un servomoteur selon la présente invention, associé, à l'avant, à un maître-cylindre 48, avantageusement, un maître-cylindre tandem. Avantageusement, le servomoteur comporte un corps 201 sensiblement tubulaire, dont la partie avant 203 reçoit la partie arrière du maître-cylindre 48 avec, par exemple, une fixation par des boulons (non représentés) passant dans des ouvertures ménagées dans des brides ou analogues. Il est avantageux de pouvoir utiliser des maîtres cylindre standard, ou tout au plus légèrement modifiés par rapport aux maîtres cylindre standard, normalement utilisés avec des servomoteurs pneumatiques d'assistance au freinage. La partie arrière 205 comporte une bride de fixation sur le tablier du véhicule. A l'intérieur d'un alésage du corps 201, est disposé un piston hydraulique 78 délimitant avec ledit alésage, une chambre de poussée 76. Avantageusement, le servomoteur selon la présente invention est muni d'un dispositif de réaction, tel qu'un disque de réaction 40 disposé, dans l'exemple illustré, dans un logement du piston 78, logement dont la face arrière forme un épaulement d'appui sur la face arrière du disque 40 et présentant une ouverture centrale de réception d'un plongeur 32. Le rapport des surfaces entre celle de l'épaulement du piston pneumatique et celle de la face avant du plongeur 32 susceptible de prendre appui sur la face arrière du disque 40 détermine le rapport d'assistance du servomoteur. Une distance au repos entre la face avant du plongeur et la face arrière, en vis-à-vis du disque de réaction, mesurée selon l'axe de l'ensemble servomoteur-maître-cylindre, détermine le saut. Une tige de poussée 47 prend appui sur une face avant du disque de réaction 40 et sur l'arrière d'un piston primaire 207 du maître-cylindre. Un ressort de rappel 209, avantageusement hélicoïdal assure le rappel du piston hydraulique 78 vers sa position de repos. De même, un ressort de rappel 211, de plus faible raideur ramène le plongeur 32 vers sa position de repos. Une tige de commande 36 reçoit la poussée d'une pédale de frein 1 qu'elle transmet au plongeur 32.

Le servomoteur de la figure 3 prenant une grande sécurité de fonctionnement dans la mesure où en cas de panne de la source 116, seul le ressort de rappel 209 s'oppose au freinage (non assisté) permettant d'arrêter un véhicule défaillant. La force à exercer, notamment dans un tel cas, peut encore être limitée en choisissant un diamètre faible pour au moins un des alésages du maître-cylindre 48.

Sur la figure 3, on peut voir un exemple de réalisation d'un servomoteur selon la présente invention pour lequel la source de pression 116 comporte une pompe 215 entraînée par un moteur électrique 88. Avantageusement, la source 116 comporte des moyens 118 d'isolation hermétique, sur commande, avantageusement du calculateur 5, de la connexion 213 d'alimentation de la chambre de poussée 76. Dans l'exemple illustré sur la figure 3, les moyens 118 d'isolation hermétique comportent une première électroélectrovanne 118.1 assurant, sur commande, lors d'un défreinage ou d'une diminution d'un freinage, le retour du liquide de frein vers un réservoir 98 de liquide de frein Le retour s'effectue par exemple par une canalisation 152 reliant la sortie de l'électroélectrovanne 118.1 ainsi que l'entrée basse pression de la pompe 215 au réservoir 98.

Par ailleurs, le réservoir 98 assure par écoulement gravitationnel, l'alimentation du maître-cylindre 48 en liquide de frein sous la pression atmosphérique.

Avantageusement, les moyens d'isolation hermétique comportent également une électroélectrovanne 118.2, reliant, sur commande, avantageusement du calculateur 5, la sortie haute pression de la pompe 215 à la connexion 213 de la chambre de poussée 76. Bien que la mise en oeuvre de l'électroélectrovanne proportionnelle ne sorte pas du cadre de la présente invention, les électroélectrovannes mises en oeuvre dans les différentes variantes du servomoteur selon la présente invention mettent en oeuvre, avantageusement des électroélectrovannes travaillant en tout ou rien avantageusement pilotées en largeur d'impulsion (PWM en terminologie anglo-saxonne). Avantageusement, la source de pression 116, comporte, connectée à la sortie haute pression de la pompe 215, un accumulateur de liquide de frein sous pression 148, permettant, de ne mettre en marche le moteur 88 de la pompe 215 que lorsque cela est nécessaire, par exemple lorsque la pression en sortie de la pompe 215 / de l'accumulateur 148 est inférieure à un seuil bas de pression désiré détecté par exemple par un capteur de pression 150.

Lorsque le conducteur appuie avec son pied sur la pédale 1, d'une part il actionne la tige de commande 36, le plongeur 32, le disque de réaction 40, la tige de poussée 47 et le piston primaire 207 du maître-cylindre. L'augmentation de pression dans la chambre primaire assure le déplacement du piston secondaire du maître-cylindre 48. Par ailleurs, la consigne de freinage est détectée par un capteur, par exemple le capteur 66 qui envoie un signal au calculateur 5 qui assure l'alimentation en fluide sous pression, à partir de la source 116 de la chambre de poussée 76, assurant simultanément une assistance au freinage. Par ailleurs, le calculateur 5 peut recevoir par une liaison 19 des informations complémentaires provenant d'autres capteurs et/ou calculateurs du véhicule. Par exemple, il peut recevoir une commande de freinage automatique sans appui par le conducteur sur la pédale 1. Ce freinage s'effectue également par l'alimentation en fluide sous pression par l'intermédiaire de la connexion 213 de la chambre 76. Il est à noter que dans l'exemple illustré sur la figure 2, la pédale de frein 1 s'enfonce lors des freinages automatiques.

Avantageusement, au moins certains des dispositifs de la source 116 sont utilisés pour assurer la modulation de freinage et notamment l'antiblocage des roues (ABS), le contrôle d'adhérence (ASR), le contrôle de trajectoire (ESP) ou autre. La mise en oeuvre de la pompe 215, du moteur 88 du capteur 150, et, éventuellement de l'accumulateur 148 et des moyens d'isolation hermétique 118 communs permet de diminuer le prix de revient du système de freinage du véhicule et/ou d'offrir des fonctions supplémentaires avec une augmentation des coûts modérée.

Avantageusement, les moyens 118 d'isolation hermétique de la source 116 comportent en outre une troisième électrovanne 118.3, reliant, sur commande du calculateur 5, la sortie haute pression de la pompe 215, de l'accumulateur 148 et/ou de l'électrovanne 118.2 à une des chambres du maître-cylindre 48, par exemple, comme illustré à la chambre primaire dudit maître-cylindre 48. Dans une première variante de réalisation, une conduite 217 d'alimentation, sur commande, de la chambre primaire du maître-cylindre débouche dans une chambre de réalimentation du maître-cylindre disposé entre deux coupelles appliquées sur le piston primaire 207. Dans un tel cas, une fuite au niveau des vannes 118.3 et 118.1 ne compromet pas la sécurité de freinage dans la mesure où les coupelles s'opposent à une diminution de pression dans la chambre du maître-cylindre. Toutefois, dans un tel cas, il faut assurer l'isolation hermétique de la chambre de réalimentation par rapport au réservoir 98 de manière à éviter d'introduire du liquide de frein sous pression dans ce réservoir. Dans une première variante, illustrée sur les figures 2 et 4, on dispose d'une électrovanne supplémentaire 103 disposée sur la connexion d'alimentation de la chambre du maître-cylindre et le réservoir 98. Dans l'exemple avantageux illustré, on supprime tout simplement la liaison directe entre le réservoir 98 et la chambre de réalimentation /chambre primaire du maître-cylindre 48. En effet, les réalimentations et les retours au réservoir 98 du liquide de frein s'effectuent par la canalisation 217, l'électrovanne 118.3, l'électrovanne 118.1 et la canalisation 152.

Avantageusement, la surface efficace de la chambre de poussée 76 est adaptée à la surface efficace du piston primaire et/ou secondaire du maître cylindre 48.

Par exemple, on augmente la surface efficace de la chambre de poussée 76 par rapport à celle des chambres du maître-cylindre si on veut compenser une pression faible (par exemple limitée à 10⁷ Pa) de la source de liquide de frein sous pression. Toutefois, un tel rapport de surfaces risque d'induire un mouvement de la pédale de frein 1 lors de modes actifs.

Pour lesdites surfaces égales,la pression de saturation, c'est-à-dire la pression maximale fournie par la source haute pression est égale à la pression générée par l'assistance en sortie du maître-cylindre. La pédale 1 reste immobile pendant les modes actifs.

Pour des surfaces efficaces de la chambre de poussée 76 inférieures à celles des pistons du maître-cylindre on diminue le volume de fluide à fournir à la chambre 76 pour un freinage donné, ce qui permet de limiter le débit de la pompe, de diminuer le volume de l'accumulateur et/ou d'améliorer la dynamique du freinage c'est-à-dire de diminuer le temps de réponse du système de freinage.

Dans l'exemple illustré, sur la figure 4, la source de pression 116 d'alimentation de la chambre de poussée 76 comportent un maître cylindre 82 comportant une chambre 84 à volume variable dans laquelle la pression du liquide de frein est augmentée par un piston 86 entraîné, sur commande 100 par un moteur 88, avantageusement un moteur électrique.

Dans l'exemple illustré, sur la figure 4, la chambre 84 est une chambre annulaire reliée par une canalisation 90 à la chambre de poussée 76. Avantageusement, le moteur est un moteur pas à pas et entraîne le piston 86 par l'intermédiaire d'une vis à billes.

Dans l'exemple avantageux illustré, le piston 86 comporte à au moins une de ses extrémités axiales, un joint hydraulique susceptible de supporter les pressions de commande de préférence comme illustré, un joint de type coupelle.

Avantageusement, le servomoteur selon la présente invention comporte en outre, une électrovanne 94 assurant la fermeture hermétique, sur commande, d'une canalisation 96 reliant la chambre 84 au maître cylindre 48. Dans l'exemple avantageux illustré, la canalisation 96 débouche du côté du maître cylindre 48 entre deux coupelles délimitant, de manière connue, une chambre de réalimentation du maître cylindre. Cette chambre est d'autre part reliée à un réservoir 98 de liquide de frein. En outre, au repos, la chambre de réalimentation est reliée par des ouvertures pratiquées dans le piston primaire à la chambre primaire du maître cylindre 48. Au contraire, lorsque le piston primaire avance, les ouvertures passent au-delà de la coupelle antérieure permettant la montée en pression du circuit de freinage. L'électrovanne 94 permet en cas de panne du moteur 88 en cours de freinage de relâcher la pression de la chambre 84 dans le réservoir 98 et ainsi d'éviter dans l'éventualité d'une panne du moteur 88, un freinage non désiré. De même, il est à noter qu'en absence d'assistance suite à une panne du moteur 88, une poussée sur la tige de commande entraîne directement la tige de poussée 47 sans avoir à entraîner le moteur 88.

Avantageusement, le servomoteur selon la présente invention, comporte une seconde électrovanne 102 isolant, sur commande la chambre de poussée 76 de la chambre 84 du maître cylindre 82. Ainsi, il est possible de maintenir une pression hydraulique de freinage constante indépendamment de l'action du moteur. Cela peut être utile, par exemple pour des pressions constantes sur la pédale de frein, par exemple lors d'un arrêt à un feu rouge, d'un arrêt prolongé ou d'une descente sur une route en pente avec freinage constant. Ainsi, il n'est pas utile dans un tel cas d'actionner le moteur 88. On diminue ainsi la consommation électrique ainsi que l'usure du moteur. La seconde électrovanne 102 est particulièrement utile dans le cas de mise en oeuvre de vis réversibles, c'est-à-dire des vis susceptibles d'être entraînées en rotation par une variation de pression dans la chambre moteur 76.

Avantageusement, le servomoteur selon la présente invention comporte en outre une troisième électroélectrovanne 103 isolant, sur commande, la chambre primaire du maître cylindre 48 du réservoir de liquide de frein 98. Il est ainsi possible d'assurer le préremplissage du circuit de freinage à travers le maître cylindre en ouvrant l'électroétectrovanne 94 en fermant la électrovanne 103 de manière à éviter que la pression fournie à la chambre primaire s'échappe vers le réservoir. Il est à noter que le préremplissage des freins s'effectue sans avancement de la tige de commande 36, par suite de la pédale de frein 1. De même, la combinaison des électrovanne 94 ouverte et électroélectrovanne 103 fermée, permet de mettre en oeuvre des modes de freinage actifs c'est-à-dire sur commande du calculateur 5, sans nécessité de l'action du conducteur et, sans déplacement de la pédale 1. Il est à noter que le piston secondaire transmet à la chambre secondaire la pression régnant dans la chambre primaire, notamment lors des freinages actifs.

Le préremplissage de frein peut être très utile pour diminuer les distances de freinage et/ou pour permettre la mise en oeuvre de frein hydraulique à recul de piston augmenté qui présente un couple de freinage résiduel (non désiré) nul et/ou tout au moins réduit.

En outre l'électrovanne 103 ou tout autre moyen d'isolation hermétique, sur commande, peut être actionnée pour isoler au moins une des chambres du maître cylindre 48, typiquement la chambre primaire de manière à, par exemple, réduire la course morte au moment de l'actionnement des freins, et de préférence avant que les trous de réalimentation du piston primaire aient dépassé la coupelle avant de la chambre primaire du maître cylindre ou, si une température anormalement élevée a été détectée lors d'un freinage risquant d'entraîner en cas de relâchement du freinage, l'ébullition du liquide de frein. Toutefois, lors du défreinage complet, c'est-à-dire sans appui sur la pédale de frein, éventuellement après une temporisation, l'électroélectrovanne 103 est réouverte de manière à éviter un freinage non désiré.

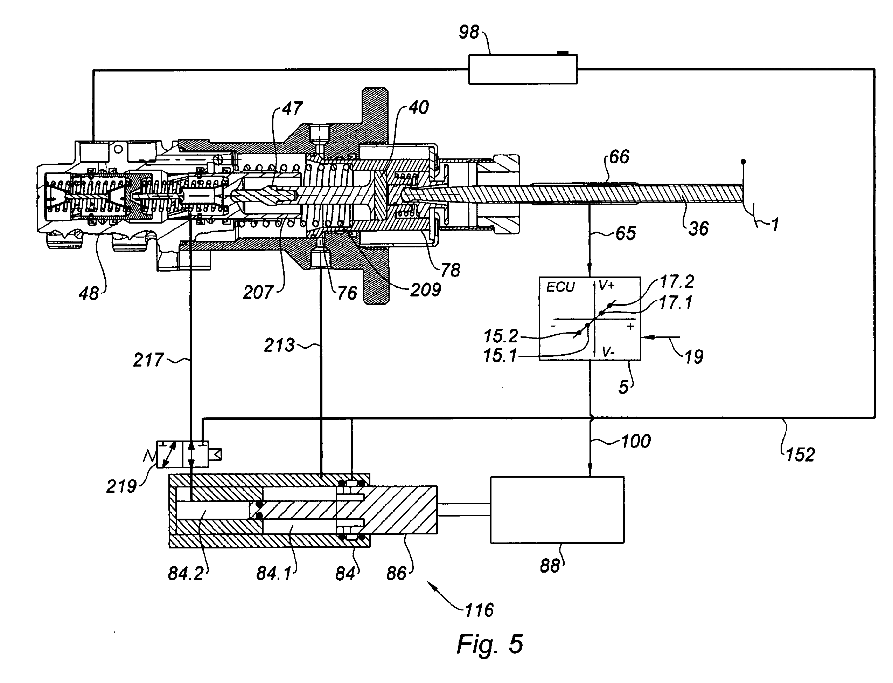

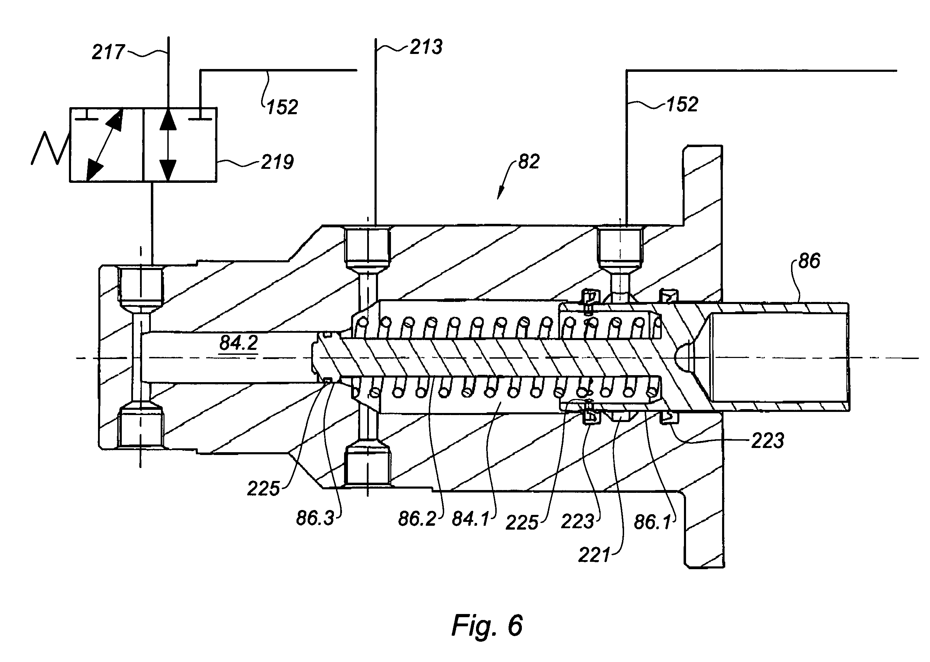

Sur la figure 5, on peut voir un exemple avantageux d'un servomoteur selon la présente invention dont la chambre de poussée 76 est alimentée par un maître-cylindre 84 motorisé. Dans l'exemple avantageux, le maître-cylindre 84 est un maître-cylindre tandem, illustré plus en détail sur la figure 6 dont la chambre primaire 84.1 alimente la connexion 213 de la chambre de poussée 76 et dont une chambre secondaire 84.2 alimente par une connexion 217 la chambre primaire du maître-cylindre 48. Il est à noter que dans un tel cas, l'alimentation s'effectue de manière préférée, directement dans la chambre du maître-cylindre et non pas dans la chambre de réalimentation de celui-ci. Avantageusement, comme illustré, seule la chambre secondaire du maître-cylindre 48 est alimentée, gravitationnellement, par le réservoir 98 de liquide de frein sous pression atmosphérique. Avantageusement, une électrovanne deux voies 219, relie, sur commande, lors d'un freinage, la chambre secondaire 84.2 du maître-cylindre 84 à la chambre primaire du maître-cylindre 48 d'alimentation de circuit de freinage. Dans cette position, l'électrovanne 219 assure simultanément l'isolation hermétique de la canalisation 217 de l'alimentation de la chambre primaire du réservoir 48 par rapport à la canalisation 152 reliée au réservoir 98.

Dans une seconde position, hors freinage, la vanne 219 isole la canalisation 217 par rapport à la chambre secondaire 84.2 du maître-cylindre 84 (et par rapport à la canalisation 152 reliée au réservoir 98) et connecte la canalisation 152 à la chambre secondaire 84.2 du maître-cylindre 84. Avantageusement, la connexion 152 est connectée, par ailleurs, de manière permanente à une chambre 221 de réalimentation de la chambre primaire 84.1 du maître-cylindre 84. Ladite chambre 221 de réalimentation est délimitée dans un alésage du maître-cylindre 84 par deux coupelles 223 appliquées sur la partie primaire du piston 86. Ledit piston 86 comporte des trous de réalimentation 225 avantageusement disposés régulièrement radialement de manière à mettre en communication, au repos, c'est-à-dire lorsque le piston 86 est reculé au maximum, (vers la droite de la figure 6), la chambre primaire 84.1 du maître-cylindre 84 avec la canalisation 152 reliée au réservoir 98. L'avancée du piston 86 déplace les trous de réalimentation 125 qui passent au-delà de la coupelle 123 avant qui assure à ce moment là l'isolation de la canalisation 152 par rapport à la chambre primaire 84.1.

Avantageusement, les alésages des chambres primaires 84.1 et secondaires 84.2 du maître-cylindre 84 ont des diamètres différents. De préférence, le diamètre de la chambre secondaire 84.2 est inférieur au diamètre de la chambre primaire 84.1. Ainsi,

L'électrovanne 119 non activée, l'actionnement de la pédale de frein provoque selon la consigne du dispositif de pilotage un déplacement de fluide hydraulique de la chambre primaire du maître-cylindre 84 vers la chambre de travail 76. Simultanément, le volume balayé par la chambre secondaire de ce même maître-cylindre sera transféré au réservoir sans montée en pression à travers l'électrovanne 219 et la canalisation 152. Ce dernier déplacement de fluide sera donc sans influence sur la caractéristique de freinage. La relation entre la course d'entrée à la tige de commande 36 et la pression des chambres primaires et secondaires du maître-cylindre 48 sera donc fonction des sections respectives des chambres de ce dernier maître-cylindre, et de celles des récepteurs de freinage du véhicule (freins), comme pour les systèmes de freinage classiques dits « non découplés ».

L'électrovanne 119 activée, de part la séparation totale des deux chambres du maître-cylindre 84, l'actionnement de la pédale de frein provoque selon la consigne du dispositif de pilotage un déplacement simultané de fluide hydraulique de la chambre primaire du maître-cylindre 84 vers la chambre de travail 76, et de la chambre secondaire de ce dernier maître-cylindre vers la chambre primaire du maître-cylindre 48. La valeur de ce dernier volume de fluide sera fonction de la section de la chambre secondaire du maître-cylindre 84. Ce volume additionnel par rapport à la situation de freinage décrite dans le paragraphe précédent participe au remplissage des circuits de freinage primaire et secondaire du véhicule. Il en résulte que la course d'entrée à la tige de commande 36 nécessaire pour atteindre une pression de circuit de freinage donnée sera raccourcie d'une valeur proportionnelle à la section de la chambre secondaire du maître-cylindre 84. Il est ainsi possible avec un système de freinage dit non découplé et qui offre donc des avantages en terme de robustesse et de sensation pédale par rapport à un système dit « découplé » avec simulateur, d'obtenir une caractéristique de freinage course d'entrée/pression circuit plus courte, tout en conservant un maître-cylindre 48 dimensionné de manière classique afin d'atteindre les performances de freinage de secours (en cas de panne de l'assistance au freinage) requises par la législation.

A l'inverse, un véhicule qui repose sur un système électronique du type HBC, c'est-à-dire avec génération de pression par le groupe hydraulique du dispositif ESP pour compenser une éventuelle défaillance de l'assistance au freinage pour répondre à la législation de manière à pouvoir garder une course pédale acceptable en mode de freinage normal, peut bénéficier de l'invention pour gagner en robustesse. Ainsi, par exemple, une panne de courant électrique totale du véhicule sera sans influence sur les performances de freinage de secours, contrairement au cas où le véhicule repose sur la fonction électronique pour atteindre la distance d'arrêt requise par la législation.

Par ailleurs, ce dispositif peut être exploité en tant que fonction permettant au conducteur de choisir entre deux comportements du système de freinage. Le choix s'effectue par une interface utilisateur, par exemple, en appuyant sur une touche de commande ou en choisissant dans un menu de configuration du véhicule. Par exemple un mode 'normal' pour lequel l'électrovanne 119 serait en position non activée, et un mode 'sport' pour lequel l'électrovanne 119 serait activée, offrant ainsi au conducteur une pédale plus courte et mieux adaptée à une conduite sportive.

Avantageusement, un piston unique 86 entre deux pistons liés mécaniquement en translation selon l'axe du maitre-cylindre 84 assure la mise en pression du liquide de frein présent dans les chambres 84.1 et 84.2. Dans l'exemple avantageux illustré, le piston 86 unique comporte une zone tubulaire 86.1 arrière sur laquelle s'appliquent les coupelles 223 prolongées vers l'avant jusqu'à la chambre 84.2 par une tige 86.2 coaxiale terminée par un disque 86.3 formant piston secondaire muni d'une gorge de réception d'un joint 225 par exemple torique.

Le piston 86 permet d'alimenter la chambre du maître-cylindre 48 ainsi que la chambre de poussée 76 mais également la longueur et les diamètres des pistons permettent de sélectionner les volumes à injecter.

L'invention s'applique notamment à l'industrie automobile.

L'invention s'applique principalement à l'industrie du freinage.
(5) Calculateur
(19) Signal
(32) Plongeur
(36) Tige de commande
(40) Disque de réaction
(47) Tige de poussée
(48) Maître-cylindre
(65) Consignes de freinage
(66) Capteur
(72) Servomoteur d'assistance au freinage
(76) Chambre de poussée
(78) Piston
(84) Chambre
(86) Piston
(88) Moteur
(90) Canalisation
(94) Electrovanne
(96) Canalisation
(98) Réservoir de liquide de frein
(100) Signal de commande
(103) Electrovanne
(116) Source
(118) Moyen (d'isolation thermique)
(148) Accumulateur
(150) Capteur de pression
(152) Liaison
(201) Corps
(203) Partie avant
(205) Partie arrière
(207) Piston primaire
(209) Ressort de rappel
(211) Ressort de rappel
(213) Connection
(215) Pompe
(217) Connection
(221) Chambre de réalimentation
(223) Coupelles
(225) Trous de réalimentation

## Revendications

1. Maître-cylindre (48) comportant au moins une chambre à volume variable et un piston mobile (207), dont le déplacement fait varier le volume de ladite chambre, des moyens de connection de ladite chambre à un circuit hydraulique de freinage et des moyens (217) de connection à une source (116) de liquide de frein sous pression qui comporte un maître-cylindre comportant une première chambre (84.2) à volume variable et un piston (86), ladite chambre étant connectée par des moyens de connection (217) à ladite chambre dudit maître-cylindre (48) comportant des moyens de connection à un circuit hydraulique, et une seconde chambre à volume variable (84.1) reliée par une connection (213) audit moyen d'assistance hydraulique de freinage (76), **caractérisé en ce que** le piston (86) est entrainé, sur commande d'un calculateur 5, par un actionneur (88).

2. Maître-cylindre selon la revendication 1 **caractérisé en ce que** lesdits moyens (217) de connection à une source (116) de liquide de frein sous pression débouchent directement dans ladite chambre à volume variable.

3. Maître-cylindre selon la revendication 1 **caractérisé en ce qu'**il comporte une chambre de réalimentation et **en ce que** lesdits moyens (217) de connection à une source de liquide de frein sous haute pression débouchent dans ladite chambre de réalimentation.

4. Système de freinage **caractérisé en ce qu'**il comporte un maître-cylindre selon l'une quelconque des revendications précédentes, une source (116) de liquide de frein sous pression connectée par lesdits moyens de connection (217) à ladite chambre à volume variable dudit maître-cylindre (48) et des moyens de commande (5, 219, 118) d'alimentation de ladite chambre à volume variable en liquide de frein sous pression.

5. Système de freinage selon la revendication 4 **caractérisé en ce qu'**il comporte en outre des moyens d'assistance de freinage hydraulique (76).

6. Système de freinage selon la revendication 5 **caractérisé en ce qu'**il comporte des moyens (213) de connection de la source de liquide de frein sous pression (116) à une chambre de poussée (76) desdits moyens d'assistance hydrauliques de freinage.

7. Système de freinage selon la revendication 4, 5 ou 6 **caractérisé en ce qu'**il comporte en outre des moyens (118, 219) d'isolation hermétique, sur commande, de ladite chambre à volume variable dudit maître-cylindre (48) par rapport à ladite source (116) de liquide de frein sous pression.

8. Système de freinage selon la revendication 1 **caractérisé en ce que** ledit maître-cylindre (82) de ladite source (116) de liquide de frein sous pression comporte deux chambres (84.2, 84.1) ayant deux diamètres différents et **en ce qu'**ils comportent des moyens (86.2) liant en translation les moyens (86.3, 86.1) assurant la variation des volumes internes desdites chambres à volume variable (84.2, 84.1) dudit maître-cylindre.

## Claims

1. Master cylinder (48) comprising at least one variable-volume chamber and one moving piston (207), the movement of which causes the volume of said chamber to vary, means of connecting said chamber to a hydraulic braking circuit and means (217) of connection to a source (116) of pressurized brake fluid which comprises a master cylinder comprising a variable-volume first chamber (84.2) and a piston (86), said chamber being connected by means of connection (217) to said chamber of said master cylinder (48) comprising means of connection to a hydraulic circuit, and a variable-volume second chamber (84.1) connected by a connection (213) to said hydraulic brake boosting means (76), **characterized in that** the piston (86) is driven, on demand from a control unit (5), by an actuator (88).

2. Master cylinder according to Claim 1, **characterized in that** said means (217) of connection to a source (116) of pressurized brake fluid open directly into said variable-volume chamber.

3. Master cylinder according to Claim 1, **characterized in that** it comprises a resupply chamber and **in that** said means (217) of connection to a source of high-pressure brake fluid open into said resupply chamber.

4. Braking system, **characterized in that** it comprises a master cylinder according to any one of the preceding claims, a source (116) of pressurized brake fluid connected by said means of connection (217) to said variable-volume chamber of said master cylinder (48) and control means (5, 219, 118) for controlling the supply of pressurized brake fluid to said variable-volume chamber.

5. Braking system according to Claim 4, **characterized in that** it further comprises hydraulic brake boosting means (76).

6. Braking system according to Claim 5, **characterized in that** it comprises means (213) of connecting the source of pressurized brake fluid (116) to a thrust chamber (76) of said hydraulic brake boosting means.

7. Braking system according to Claim 4, 5 or 6, **characterized in that** it further comprises means (118, 219) of hermetically isolating, on command, said variable-volume chamber of said master cylinder (48) with respect to said source (116) of pressurized brake fluid.

8. Braking system according to Claim 1, **characterized in that** said master cylinder (82) of said source (116) of pressurized brake fluid comprises two chambers (84.2, 84.1) having two different diameters, and **in that** they comprise means (86.2) translationally linking the means (86.3, 86.1) that vary the internal volumes of said variable-volume chambers (84.2, 84.1) of said master cylinder.

## Patentansprüche

1. Hauptzylinder (48), mit mindestens einer Kammer mit variablem Volumen und einem beweglichen Kolben (207), dessen Verlagerung eine Änderung des Volumens der Kammer bewirkt, mit Mitteln zur Verbindung der Kammer mit einem hydraulischen Bremskreis und mit Mitteln (217) zur Verbindung mit einer Quelle (116) für unter Druck stehenden Bremsflüssigkeit, die einen Hauptzylinder mit einer ersten Kammer (84.2) mit variablem Volumen und einem Kolben (86) aufweist, wobei die Kammer über Verbindungsmittel (217) mit der Kammer des Hauptzylinders (48) verbunden ist, der Mittel zur Verbindung mit einem Hydraulikkreis aufweist, und mit einer zweiten Kammer (84.1) mit variablem Volumen, die über eine Verbindung (213) mit dem Mittel (76) zur hydraulischen Bremsunterstützung verbunden ist, **dadurch gekennzeichnet, dass** der Kolben (86) auf Befehl eines Rechners (5) von einem Betätigungselement (88) angetrieben wird.

2. Hauptzylinder nach Anspruch 1, **dadurch gekennzeichnet, dass** die Mittel (217) zur Verbindung mit einer Quelle (116) für unter Druck stehende Bremsflüssigkeit direkt in die Kammer mit variablem Volumen münden.

3. Hauptzylinder nach Anspruch 1, **dadurch gekennzeichnet, dass** er eine Kammer zur Nachspeisung aufweist und die Mittel (217) zur Verbindung mit einer Quelle für unter hohem Druck stehende Bremsflüssigkeit in die Kammer zur Nachspeisung münden.

4. Bremssystem, **dadurch gekennzeichnet, dass** es einen Hauptzylinder nach einem der vorhergehenden Ansprüche, eine Quelle (116) für unter Druck stehende Bremsflüssigkeit, die über die Verbindungsmittel (217) mit der Kammer mit variablem Volumen des Hauptzylinders (48) verbunden ist, und Mittel (5, 219, 118) zur Steuerung der Speisung der Kammer mit variablem Volumen mit unter Druck stehender Bremsflüssigkeit aufweist.

5. Bremssystem nach Anspruch 4, **dadurch gekennzeichnet, dass** es ferner Mittel (76) zur hydraulischen Bremsunterstützung aufweist.

6. Bremssystem nach Anspruch 5, **dadurch gekennzeichnet, dass** es Mittel (213) zur Verbindung der Quelle (116) für unter Druck stehende Bremsflüssigkeit mit einer Kammer (76) zum Schieben der hydraulischen Mittel zur Bremsunterstützung aufweist.

7. Bremssystem nach Anspruch 4, 5 oder 6, **dadurch gekennzeichnet, dass** es ferner Mittel (118, 219) aufweist zur hermetischen Isolierung auf Befehl der Kammer mit variablem Volumen des Hauptzylinders (48) in Bezug auf die Quelle (116) für unter Druck stehende Flüssigkeit.

8. Bremssystem nach Anspruch 1, **dadurch gekennzeichnet, dass** der Hauptzylinder (82) der Quelle (116) für unter Druck stehende Bremsflüssigkeit zwei Kammern (84.2, 84.1) mit zwei unterschiedlichen Durchmessern sowie Mittel (86.2) aufweist, die die Mittel (86.3, 86.1) translatorisch verbinden, welche die Änderung der Innenvolumen der Kammern (84.2, 84.1) mit variablem Volumen des Hauptzylinders gewährleisten.
